# EUROPÄISCHE PATENTSCHRIFT

(11) **EP 3 610 557 B1**
(45) Veröffentlichungstag und Bekanntmachung des Hinweises auf die Patenterteilung: **12.10.2022**
(21) Anmeldenummer: 18713844.1
(22) Anmeldetag: 21.03.2018
(51) Int. Cl.: H02K 1/14, H02K 5/22, H02K 15/02, H02K 3/34, H02K 5/128

(54) **ELEKTRISCHER ANTRIEBSMOTOR, NASSLÄUFER-PUMPE UND HAUSHALTSGERÄT, SOWIE VERFAHREN ZUR HERSTELLUNG EINES SOLCHEN ELEKTRISCHEN ANTRIEBSMOTORS**
ELECTRICAL DRIVE MOTOR, WET ROTOR PUMP, AND DOMESTIC APPLIANCE, AND METHOD FOR PRODUCING AN ELECTRIC DRIVE MOTOR OF THIS KIND
MOTEUR D'ENTRAÎNEMENT ÉLECTRIQUE, POMPE À ROTOR HUMIDE ET APPAREIL DOMESTIQUE, ET PROCÉDÉ DE FABRICATION D'UN TEL MOTEUR À ENTRAÎNEMENT ÉLECTRIQUE

(30) Priorität: 10.04.2017 DE 102017206091
(43) Veröffentlichungstag der Anmeldung: 19.02.2020
(73) Patentinhaber: BSH Hausgeräte GmbH, 81739 München (DE)
(72) Erfinder: BIZON, Peter, 06601 Humenne (SK); IVANAK, Martin, 04012 Kosice (SK); KALAVSKY, Michal, 04023 Kosice (SK)
(86) Internationale Anmeldenummer: PCT/EP2018/057116
(87) Internationale Veröffentlichungsnummer: WO 2018/188920

(56) Entgegenhaltungen:
- EP-A2- 2 120 313
- US-A1- 2009 243 408
- US-A1- 2011 027 112
- US-A1- 2014 009 031

## Beschreibung

Die Erfindung betrifft eine Nassläufer-Pumpe für ein Haushaltsgerät. Die Erfindung betrifft außerdem ein Haushaltsgerät aufweisend eine solche Nassläufer-Pumpe.

Z.B. die EP 2 908 407 A2 gibt eine Nassläufer- Pumpe an. Ihr elektrischer Antriebsmotor umfasst eine elektrisch ansteuerbare Statorwicklung und einen im Feld der Statorwicklung unter Belassen eines Ringspaltes drehantreibbar gelagerten Rotor. Dieser weist eine Motorwelle, einen auf der Motorwelle sitzenden Magnetträger und mehrere um wenigstens eine Mantelfläche des Magnetträgers verteilt angeordnete Permanentmagnete auf. Die Permanentmagnete weisen jeweils wenigstens eine Außenoberfläche auf und sind mittels eines durch Umspritzen des Magnetträgers hergestellten Kunststoffkörpers an dem Magnetträger befestigt. Die Permanentmagnete sind an ihren dem Ringspalt zugewandten Außenoberflächen durch den Kunststoffkörper derart form- und/oder kraftschlüssig gehalten, dass zumindest ein Teil dieser Außenoberflächen freiliegt.

EP 2 120 313 A2 offenbart: Elektrischer Antriebsmotor mit einem Stator mit einem aus mehreren gestapelten Einzelblechen zusammengesetzten Statorblechpaket, das mehrere Polschuhe aufweist, mit einer der Anzahl der Polschuhe entsprechenden Anzahl von Spulenkörpern und mit wenigstens einer auf den Spulenkörpern aufgewickelten elektrisch ansteuerbaren Statorwicklung, und des Weiteren einen im Feld der Statorwicklung unter Belassen eines Ringspaltes drehantreibbar gelagerten Permanentmagnetenrotor, der eine Motorwelle, einen auf der Motorwelle sitzenden Permanentmagnetenträger und wenigstens einen durch den Permanentmagnetenträger gehaltenen Permanentmagneten umfasst, aufweist, wobei auf der Motorwelle ein Permanentmagnetenträger des Permanentmagnetenrotors befestigt ist, wobei die Einzelbleche jeweils aus einer linearen Kette von einer der Anzahl der Polschuhe entsprechenden Anzahl von Pohlschuh-Gliedern gebildet sind, die nach einem Ausstanzen der linearen Ketten jeweils zu einem Kreisring gebogen sind, wobei die mehreren Kreisringe zu einem Kreisring-Statorblechpaket gestapelt sind, dass die Spulenkörper durch einen Kunststoffspritzgusskörper gebildet werden, der im Kunststoffspritzgießverfahren durch Umspritzen des Kreisring-Statorblechpakets gebildet ist.

Die Aufgabe der Erfindung ist es, eine Nassläufer-Pumpe für ein Haushaltsgerät bereitzustellen, welche einen elektrischen Antriebsmotor, insbesondere einen bürstenlosen Gleichstrommotor, umfasst, dessen Stator verbessert ist. Insbesondere dadurch soll der Permanentmagnetenrotor dieses Antriebsmotors eine verbesserte Laufruhe aufweisen.

Diese Aufgabe der Erfindung wird durch eine erfindungsgemäße Nassläufer-Pumpe mit den Merkmalen des Anspruchs 1 gelöst:
Nassläufer-Pumpe für ein Haushaltsgerät, aufweisend eine Pumpenkammerwand, die einen Nassraum der Nassläufer-Pumpe begrenzt, ein im Nassraum drehbar gelagertes Pumpenrad und einen das Pumpenrad antreibenden elektrischen Antriebsmotor, wobei der elektrische Antriebsmotor einen Stator mit einem aus mehreren gestapelten Einzelblechen zusammengesetzten Statorblechpaket, das mehrere Polschuhe aufweist, mit einer der Anzahl der Polschuhe entsprechenden Anzahl von Spulenkörpern und mit wenigstens einer auf den Spulenkörpern aufgewickelten elektrisch ansteuerbaren Statorwicklung, und des Weiteren einen im Feld der Statorwicklung unter Belassen eines Ringspaltes drehantreibbar gelagerten Permanentmagnetenrotor, der eine Motorwelle, einen auf der Motorwelle sitzenden Permanentmagnetenträger und wenigstens einen durch den Permanentmagnetenträger gehaltenen Permanentmagneten umfasst, aufweist, wobei der Stator des elektrischen Antriebsmotors außerhalb des Nassraumes angeordnet ist, und der Permanentmagnetenrotor des elektrischen Antriebsmotors innerhalb des Nassraumes drehantreibbar gelagert ist, wobei auf der Motorwelle sowohl ein Permanentmagnetenträger des Permanentmagnetenrotors, als auch das Pumpenrad befestigt sind, und wobei zwischen dem Stator und dem Permanentmagnetenrotor eine kreiszylindrische Mantelwand angeordnet ist, die eine Pumpenkammerwand eines Pumpengehäuses ist und eine den Ringspalt begrenzende Innenwand und eine dem Stator zugewandte Außenwand aufweist, wobei die Einzelbleche jeweils aus einer linearen Kette von einer der Anzahl der Polschuhe entsprechenden Anzahl von Pohlschuh-Gliedern gebildet sind, die nach einem Ausstanzen der linearen Ketten jeweils zu einem Kreisring gebogen sind, wobei die beiden aneinanderstoßenden, gegenüberliegenden Kettenenden des jeweils derart geformten Kreisrings durch jeweils eine Schweißstelle fest verbunden sind, dass die mehreren Kreisringe zu einem Kreisring-Statorblechpaket gestapelt sind, dass die Spulenkörper durch einen Kunststoffspritzgusskörper gebildet werden, der im Kunststoffspritzgießverfahren durch Umspritzen des Kreisring-Statorblechpakets gebildet ist, dass an der dem Stator zugewandten Außenwand der kreiszylindrischen Mantelwand Gegenführungen angeordnet sind, und dass an dem Kunststoffspritzgusskörper Führungen ausgebildet sind, die mit den korrespondierenden Gegenführungen formschlüssig zusammenwirken, um den Stator zumindest in radialer Richtung an der Außenwand der Mantelwand zu befestigen.

Indem die Einzelbleche jeweils aus einer linearen Kette von einer der Anzahl der Polschuhe entsprechenden Anzahl von Pohlschuh-Gliedern gebildet sind, die nach einem Ausstanzen der linearen Ketten jeweils zu einem Kreisring gebogen sind, wobei die beiden aneinanderstoßenden, gegenüberliegenden Kettenenden des jeweils derart geformten Kreisrings durch jeweils eine Schweißstelle fest verbunden sind, und indem die mehreren Kreisringe zu einem Kreisring-Statorblechpaket gestapelt sind und die Spulenkörper durch einen Kunststoffspritzgusskörper gebildet werden, der im Kunststoffspritzgießverfahren durch Umspritzen des Kreisring-Statorblechpakets gebildet ist, kann ein besonders gut elektrisch isoliertes Statorblechpaket gebildet werden, das besonders wenige oder sogar gar keine Lufteinschlüsse aufweist und das besonders steif ausgebildet ist. Als ein weiterer Effekt kann die Wärmeleitfähigkeit des Stators dadurch verbessert sein, wodurch das Temperaturverhalten des gesamten elektrischen Antriebsmotors verbessert sein kann. Das verbesserte Temperaturverhalten kann weiter gesteigert werden und zwar dadurch, dass auch der Permanentmagnetenrotor einen Permanentmagnetenträger aufweist, der von einem Spritzgießkörper gebildet wird. Ein solcher Permanentmagnetenträger lagert und verbindet die Einzelpermanentmagnete bezüglich der Motorwelle und zwar insbesondere dadurch, dass im Falle einer Nassläufer-Pumpe, die einen solchen elektrischen Antriebsmotor aufweist, das Pumpenrad an einem ersten axialen Endabschnitt der Motorwelle befestigt ist und der Permanentmagnetenträger an einem dem ersten Endabschnitt der Motorwelle gegenüberliegenden zweiten axialen Endabschnitt der Motorwelle befestigt ist und die Motorwelle mittels einer Lagerung innerhalb des Nassraumes drehbar gelagert ist, welche die Motorwelle an einem axial zwischen dem ersten Endabschnitt der Motorwelle und dem zweiten Endabschnitt der Motorwelle angeordneten Zwischenabschnitt der Motorwelle trägt.

Die linearen Ketten werden aus einem Halbzeugblech, das beispielsweise eine rechteckige oder quadratische Blechplatte, wie bspw. ein Trafoblech sein kann, ausgestanzt. Es können ganze lineare Ketten ausgestanzt werden. Die linearen Ketten können insbesondere zuerst auf die benötigte, d.h. gewünschte Dicke gestapelt werden und anschließend zu dem Kreisring-Statorblechpaket gebogen werden. Alternativ könnten auch die einzelnen Schichten von linearen Ketten gegebenenfalls zuerst zu einzelnen Kreisring-Statorblechscheiben gebogen werden, die erst anschließend zu dem Kreisring-Statorblechpaket aufgestapelt werden. Die jeweiligen Stöße von Kettenenden jeder linearen Kette können einzeln oder im Pakte gestapelt durch Schweißen verbunden werden, um starre Statorringe zu bilden.

Das Kreisring-Statorblechpaket kann annähernd vollständig von dem Kunststoffspritzgusskörper umspritzt werden, so dass vorzugsweise lediglich die nach innen in Richtung des Permanentmagnetenrotor weisenden Innenmantelflächen der Polschuhe freiliegen und die nach außen gerichteten Umfangsmantelwände der Polschuh-Glieder.

Dadurch, dass das Kreisring-Statorblechpaket zumindest annähernd vollständig von dem Kunststoffspritzgusskörper umspritzt ist, wird ein besonders stabiles Kreisring-Statorblechpaket geschaffen, das anschließend in besonders sicherer und zuverlässiger Weise mit der Statorwicklung, insbesondere in einem vollautomatischen Wickelverfahren, bewickelt werden kann. Durch das besonders stabile Kreisring-Statorblechpaket kann im Betrieb des elektrischen Antriebsmotors, insbesondere im Betrieb der diesen elektrischen Antriebsmotor aufweisenden Nassläufer-Pumpe ein besonders ruhiger, d.h. vibrationsarmer Lauf des Permanentmagnetenrotors und des Pumpenrads erreicht werden. Ein besonders ruhiger, d.h. vibrationsarmer Lauf wird zusätzlich unterstützt, indem auch der Permanentmagnetenrotor einen Permanentmagnetenträger aufweist, der von einem Spritzgießkörper gebildet wird.

In einer ersten Weiterbildung können an dem Kunststoffspritzgusskörper Verbindungskanäle ausgebildet sein, in denen die zwischen jeweils zwei benachbarten Spulenkörpern übertretenden Leitungsabschnitte der Statorwicklung geführt sind.

Die Spulenkörper sind derart ausgebildet, dass die Statorwicklung auf die Spulenkörper aufgewickelt werden können. Jeder Spulenkörper kann von einer separaten Einzelwicklung umwickelt sein, wobei dann die beiden jeweiligen Wicklungsenden jeder Einzelwicklung elektrisch verdrahtet und/oder kontaktiert werden. Alternativ können alle Spulenkörper von einer gemeinsamen Statorwicklung umwickelt werden, die aus einem fortlaufenden Einzeldraht gebildet wird. In beiden Fällen dienen die Verbindungskanäle dazu, die zwischen jeweils zwei benachbarten Spulenkörpern übertretenden Leitungsabschnitte der Statorwicklung zu führen und insbesondere vor Beschädigung zu schützen.

In einer alternativen oder ergänzenden zweiten Weiterbildung kann an dem Kunststoffspritzgusskörper ein Steckergehäuse ausgebildet sein, in dem wenigstens zwei an die Statorwicklung angeschlossene Steckkontakte gelagert sind.

Indem an dem Kunststoffspritzgusskörper ein Steckergehäuse ausgebildet, insbesondere ein Steckergehäuse aus Kunststoff unmittelbar an dem Kunststoffspritzgusskörper mit angespritzt ist, bzw. in einem Spritzgießvorgang zusammen mit dem Kunststoffspritzgusskörper aus einem Kunststoffspritzmaterial erzeugt wird, können die im Steckergehäuse vorgesehenen Steckkontakte besonders sicher an die Enden der Statorwicklung elektrisch kontaktiert werden, wobei dann insbesondere sehr geringe mechanische Belastungen auf den Wicklungsenden liegen.

Erfindungsgemäß ist zwischen dem Stator und dem Permanentmagnetenrotor eine kreiszylindrische Mantelwand angeordnet, die eine den Ringspalt begrenzende Innenwand und eine dem Stator zugewandte Außenwand aufweist, an der Gegenführungen angeordnet sind, wobei an dem Kunststoffspritzgusskörper außerdem Führungen ausgebildet sind, die mit den korrespondierenden Gegenführungen formschlüssig zusammenwirken, um den Stator zumindest in radialer Richtung an der Außenwand der Mantelwand zu befestigen.

Mittels der zusammenwirkenden Führungen und Gegenführungen kann der durch das erfindungsgemäße Umspritzen erzeugte Stator besonders einfach und zuverlässig an die kreiszylindrische Mantelwand aufgesteckt werden. So können gesonderte Befestigungsmittel entfallen und die Montage kann erleichtert werden und zuverlässiger gestaltet werden.

Die kreiszylindrische Mantelwand ist erfindungsgemäß eine Pumpenkammerwand eines Pumpengehäuses einer den elektrischen Antriebsmotor aufweisenden Nassläufer-Pumpe. Unter einer Nassläufer-Pumpe wird im Rahmen der Erfindung ein Pumpenaggregat verstanden, welches neben einem Pumpenrad und einem Pumpengehäuse außerdem einen elektrischen Antriebsmotor, insbesondere einen bürstenlosen Gleichstrommotor, umfasst, dessen Permanentmagnetenrotor sich in dem flüssigen Fördermedium dreht. Das Fördermedium ist dabei die von dem Pumpenrad der Nassläufer-Pumpe geförderte Flüssigkeit. Beispielsweise im Falle einer Geschirrspülmaschine als Haushaltsgerät kann das Fördermedium die sogenannte Spülflotte sein. Beispielsweise im Falle einer Waschmaschine als Haushaltsgerät kann das Fördermedium die sogenannte Waschlauge sein. Bei der Nassläufer-Pumpe wird demgemäß der sich in dem Fördermedium drehende Permanentmagnetenrotor mittels der Pumpenkammerwand flüssigkeitsdicht von dem Stator des elektrischen Antriebsmotors getrennt. Der Stator befindet sich insoweit in einem trockenen Bereich der Nassläufer-Pumpe, also hydraulisch getrennt von dem Nassraum, in dem der Permanentmagnetenrotor dreht.

Der Stator weist eine vorgegebene Anzahl von Polschuhen, d.h. Statorpole auf. Der Stator kann beispielsweise 9 Polschuhe aufweisen. Der Permanentmagnetenrotor weist eine zugeordnete Anzahl von permanentmagnetischen Rotorpolen auf. Die Anzahl der Rotorpole muss nicht gleich der Anzahl der Statorpole sein. Im Falle von 9 Statorpolen können am Permanentmagnetenrotor beispielsweise 6 Rotorpole vorgesehen sein. Unabhängig der Anzahl von Rotorpolen kann der Permanentmagnetenrotor einen einzigen, zwei, drei oder mehrere Einzelpermanentmagnete aufweisen. Jeder Einzelpermanentmagnet kann dabei einen einzigen Rotorpol bilden. Alternativ kann jeder Einzelpermanentmagnet mehrere, beispielsweise zwei oder drei Rotorpole aufweisen. In der äußersten Weiterbildung kann der Permanentmagnetenrotor nur einen einzigen Einzelpermanentmagnet in Form eines Ringpermanentmagneten aufweisen, wobei dieser einzige Ringpermanentmagnet eine zum Stator passende Anzahl von Rotorpolen aufweist.

Das Pumpenrad kann an einem ersten axialen Endabschnitt der Motorwelle befestigt sein und der Permanentmagnetenträger kann dabei an einem dem ersten Endabschnitt der Motorwelle gegenüberliegenden zweiten axialen Endabschnitt der Motorwelle befestigt sein, wobei die Motorwelle mittels einer Lagerung innerhalb des Nassraumes drehbar gelagert ist, welche die Motorwelle an einem axial zwischen dem ersten Endabschnitt der Motorwelle und dem zweiten Endabschnitt der Motorwelle angeordneten Zwischenabschnitt der Motorwelle trägt.

Indem das Pumpenrad an einem ersten axialen Endabschnitt der Motorwelle befestigt ist und der Permanentmagnetenträger an einem dem ersten Endabschnitt der Motorwelle gegenüberliegenden zweiten axialen Endabschnitt der Motorwelle befestigt ist und die Motorwelle mittels einer Lagerung innerhalb des Nassraumes drehbar gelagert ist, welche die Motorwelle an einem axial zwischen dem ersten Endabschnitt der Motorwelle und dem zweiten Endabschnitt der Motorwelle angeordneten Zwischenabschnitt der Motorwelle trägt, kann eine besonders kurze Motorwelle geschaffen werden, was einen besonders kompakten und folglich stabilen Aufbau des elektrischen Antriebsmotors und damit einen besonders kompakten und folglich stabilen Aufbau der gesamten Nassläufer-Pumpe ermöglicht, was insbesondere die Laufruhe des elektrischen Antriebsmotors und auch der gesamten Nassläufer-Pumpe verbessert. Aufgrund der sehr kurzen Bauweise der Motorwelle kann der Permanentmagnetenrotor besonders genau gewuchtet werden und ggf. geringfügige Unwuchten können sich ggf. nicht so stark auswirken.

Das Merkmal, wonach die Motorwelle mittels einer Lagerung innerhalb des Nassraumes drehbar gelagert ist, welche die Motorwelle an einem axial zwischen dem ersten Endabschnitt der Motorwelle und dem zweiten Endabschnitt der Motorwelle angeordneten Zwischenabschnitt der Motorwelle trägt, bedeutet insbesondere, dass die in dem Zwischenabschnitt der Motorwelle angeordnete Lagerung die einzige Lagerung ist, welche die Motorwelle innerhalb des Nassraumes drehbar lagert. Die Motorwelle wird demgemäß ausschließlich durch diese eine Lagerung, welche die Motorwelle an seinem Zwischenabschnitt trägt, gegenüber dem Pumpengehäuse drehbar geführt und drehbar gelagert.

Die Lagerung kann ein einziges Radial-Gleitlager aufweisen, das ausgebildet ist, den Zwischenabschnitt der Motorwelle drehbar zu lagern, und ein einziges Axiallager aufweist, das ausgebildet ist, die Motorwelle in einer einzigen axialen Richtung abzustützen.

Durch das Radial-Gleitlager ist die Motorwelle in einer exakten koaxialen Position zur Pumpenkammerwand und dem Stator festgelegt. Die Lagerung umfängt dazu den Zwischenabschnitt der Motorwelle vollständig. Aufgrund der Funktion des Pumpenrades wird bei der Drehung des Pumpenrades und damit bei der Drehung der Motorwelle durch das in dem Fördermedium innerhalb des Nassraumes angeordneten Pumpenrades eine axiale Kraft in eine axiale Richtung auf die Motorwelle eingeleitet. Diese axiale Kraft in eine axiale Richtung wird durch das Axiallager aufgenommen.

Die Lagerung kann ein mit der Pumpenkammerwand fest verbundenes Lagerschild aufweisen, das einen Lagersitz trägt, an dem eine Lagerbuchse ausgebildet ist, welche eine Nabe umfasst, in welcher der Zwischenabschnitt der Motorwelle drehbar gelagert ist.

Das Lagerschild kann als ein von der Pumpenkammerwand und/oder von dem Pumpengehäuse separates Bauteil ausgebildet sein, wobei das Lagerschild in einen kreiszylindrischen Innensitz eingesetzt, insbesondere eingepresst sein kann. Das Lagerschild kann insoweit als ein separates Bauteil mit der Pumpenkammerwand fest verbunden sein.

Der Lagersitz kann von einer kreiszylindrischen und/oder topfförmigen Aufnahme gebildet werden, in welche die insbesondere separat ausgebildet Lagerbuchse eingesetzt ist. Alternativ kann die Lagerbuchse gegebenenfalls auch einteilig mit dem Lagersitz und/oder dem Lagerschild ausgebildet sein. Die Lagerbuchse weist dabei die Nabe auf, oder anders ausgedrückt, kann die Nabe von der Lagerbuchse gebildet werden. In der Lagerbuchse bzw. in der Nabe läuft die Motorwelle und zwar gelagert an ihrem Zwischenabschnitt in der Nabe.

Die Nassläufer-Pumpe kann ein Pumpengehäuse aufweisen, an dem die Pumpenkammerwand und das Lagerschild starr befestigt sind, wobei die Pumpenkammerwand eine kreiszylindrische Mantelwand aufweist und der Lagersitz konzentrisch zur kreiszylindrischen Mantelwand der Pumpenkammerwand innerhalb der Nasskammer angeordnet ist.

Das Pumpengehäuse oder ein Gehäuseteil eines mehrteiligen Pumpengehäuses kann die Pumpenkammerwand aufweisen. Die kann bedeuten, dass die Pumpenkammerwand als ein separates Bauteil an dem Pumpengehäuse oder dem Gehäuseteil befestigt ist. Alternativ kann dies bedeuten, dass die Pumpenkammerwand einteilig mit dem Pumpengehäuse oder mit dem Gehäuseteil ausgebildet ist. Im Bereich des Stators und des Permanentmagnetenrotors kann die Wandstärke der Pumpenkammerwand besonders gering ausgeführt sein. Die Pumpenkammerwand erstreckt sich dabei insoweit durch den Ringspalt, welcher den Stator von dem Permanentmagnetenrotor trennt und in dem das magnetische Feld des elektrischen Antriebsmotors funktionsgemäß wirkt.

Der Lagersitz des Lagerschilds kann eine kreiszylindrische Innenwand aufweisen und die Lagerbuchse kann dabei eine zur kreiszylindrischen Innenwand des Lagerschilds korrespondierende kreiszylindrische Außenmantelwand aufweisen, die derart ausgebildet ist, dass die Lagerbuchse passgenau in den Lagersitz eingefügt ist.

Das Lagerschild kann eine Zwischenwand bilden, welche einen ersten Teilraum des Nassraums, in dem der Permanentmagnetenträger angeordnet ist, von einem zweiten Teilraum des Nassraums, in dem das Pumpenrad angeordnet ist, separiert. Insoweit sind sowohl der erste Teilraum, als auch der zweite Teilraum von dem Fördermedium durchströmt. Dazu kann das Lagerschild entsprechende Überströmöffnungen aufweisen, über die Fördermedium aus dem ersten Teilraum in den zweiten Teilraum übertreten kann. In gleicher Weise kann das Lagerschild entsprechende Überströmöffnungen aufweisen, über die Fördermedium aus dem zweiten Teilraum in den ersten Teilraum übertreten kann.

Der Permanentmagnetenrotor kann mehrere gleichmäßig über einen Umfang verteilt angeordnete Einzelpermanentmagnete aufweisen, die von einem Rotorjoch aus magnetischem Edelstahl hinterlegt sind und der Permanentmagnetenträger kann dabei durch einen Spritzguss-Kunststoffkörper gebildet werden, welcher das Rotorjoch und die Einzelpermanentmagnete durch Umspritzen des Rotorjochs und der Einzelpermanentmagnete mit der Kunststoffmasse des Spritzguss-Kunststoffkörpers zur Bildung des Permanentmagnetenträgers verbindet.

Jeder Permanentmagnet des Permanentmagnetenrotors kann separat im Permanentmagnetenträger angeordnet sein und darin insbesondere gegen Verrutschen und/oder Herausfallen fixiert sein. Der Permanentmagnetenträger kann insbesondere dadurch hergestellt werden, dass die einzelnen Permanentmagnete und die Motorwelle in eine Spritzgießform eingesetzt, darin lagerichtig positioniert und von einem Kunststoffwerkstoff, insbesondere einem Thermoplast umspritzt werden. Der Permanentmagnetenträger entsteht in solchen Ausführungsformen insoweit durch die eingespritzte und ausgehärtete Kunststoffmasse. Die Gestalt des Permanentmagnetenträgers wird dabei durch die Form der Kavität in der Spritzgießform vorgegeben.

Generell sind alle Permanentmagnete des Permanentmagnetenrotors vorzugsweise identisch ausgebildet. Jeder Permanentmagnet kann insbesondere eine kreisringsektorförmige Gestalt aufweisen. Die Permanentmagnete können über den Umfang des Permanentmagnetenrotors gleichmäßig verteilt angeordnet sein. Insoweit können sich die über den Umfang des Permanentmagnetenrotors gleichmäßig verteilt angeordneten Permanentmagnete abgesehen von geringfügigen Spalten zu einem umlaufenden, mehrstückig zusammengesetzten Magnetring ergänzen. Jeder Permanentmagnet alleine betrachtet, ist vorzugsweise einstückig ausgebildet. Die Permanentmagnete können insbesondere aus hartmagnetischen Ferriten hergestellt sein.

Üblicherweise werden an Permanentmagnetenrotoren eine der Polzahl oder der Polpaarzahl entsprechende Anzahl von einzelnen Permanentmagnete verwendet, wobei jeder Permanentmagnet genau einen einzigen Nordpol und einen einzigen Südpol aufweist. Alternativ können Permanentmagnetrotoren auch nur einen einzigen, einstückigen kreisringförmigen Permanentmagneten aufweisen, der dann jedoch mit einer der Polzahl oder der Polpaarzahl entsprechende Anzahl von Polen magnetisiert ist.

Der Permanentmagnetenrotor kann somit einen einzelnen, mehrere magnetische Polpaare aufweisenden Ringpermanentmagnet aufweisen, der von einem Rotorjoch aus magnetischem Edelstahl hinterlegt ist und der Permanentmagnetenträger kann dabei durch einen Spritzguss-Kunststoffkörper gebildet werden, welcher das Rotorjoch und den einzelnen Ringpermanentmagnet durch Umspritzen des Rotorjochs und des einzelnen Ringpermanentmagnets mit der Kunststoffmasse des Spritzguss-Kunststoffkörpers zur Bildung des Permanentmagnetenträgers verbindet.

Das Rotorjoch kann generell aus einem weichmagnetischen Füllstoff aufweisenden Kunststoffkörper gebildet werden.

Das einteilige oder mehrteilige Rotorjoch kann insoweit aus einem Kompositwerkstoff bzw. Verbundwerkstoff hergestellt sein, das eine Mischung aus einem Kunststoff und weichmagnetischem, metallischen Pulver sein kann. Der Kunststoff kann ein insbesondere sortenreiner thermoplastischer Kunststoff sein und das weichmagnetischen, metallische Pulver kann dem thermoplastische Kunststoff hinzugefügt sein, und insbesondere als ein Masterbatch zur Verfügung gestellt sein, wobei das Rotorjoch aus einem solchen Masterbatch dann im Kunststoff-Spritzgießverfahren hergestellt sein kann. Insbesondere kann das Rotorjoch im Zweikomponenten-Spritzgießverfahren oder Mehrkomponenten-Spritzgießverfahren in einem Arbeitsgang zusammen mit dem Permanentmagnetenträger im Spritzgießverfahren hergestellt sein.

Der Permanentmagnetenträger kann topfförmig ausgebildet sein, derart, dass der Permanentmagnetenträger einen Topfbodenabschnitt aufweist, über den der Permanentmagnetenträger an dem zweiten axialen Endabschnitt der Motorwelle befestigt ist und der Permanentmagnetenträger kann dabei einen sich an den Topfbodenabschnitt anschließenden, die Motorwelle koaxial umgebenden Topfwandabschnitt aufweisen, der einen Hohlraum des Permanentmagnetenträgers begrenzt, in welchen Hohlraum sich die Lagerung hinein erstreckt.

Generell kann der Permanentmagnetenträger derart ausgebildet sein, dass er die Einzelpermanentmagnete oder den Ringpermanentmagnet auf einem Umfang trägt, der in radialer Richtung zumindest in etwa oder genau über der Lagerung liegt. Anders ausgedrückt kann der Permanentmagnetenträger derart ausgebildet sein, dass die Lagerung zumindest teilweise, vorzugsweise überwiegend oder insbesondere vollständig innerhalb einer Hohlraumes liegt, der radial außen von dem Permanentmagnetenträger und den Einzelpermanentmagnete oder den Ringpermanentmagnet begrenzt wird. Demgemäß kann der Topfwandabschnitt des Permanentmagnetenträgers die Lagerung zumindest teilweise, vorzugsweise überwiegend oder insbesondere vollständig von außen umgeben. Der Topfwandabschnitt kann dabei eine kreiszylindrische Innenmantelwand aufweisen, die den Hohlraum begrenzt, in dem die Lagerung zumindest teilweise, vorzugsweise überwiegend oder insbesondere vollständig liegt. Der Topfbodenabschnitt kann eine annähernd kreisscheibenförmige oder kegelige Grundform aufweisen, derart, dass der Topfbodenabschnitt einerseits in seinem Zentrum an dem zweiten axialen Endabschnitt der Motorwelle befestigt ist und andererseits an seinem Außenumfangsbereich den sich anschließenden Topfwandabschnitt aufweist.

Die Lagerung kann sich so weit in den Hohlraum des topfförmigen Permanentmagnetenträgers erstrecken, dass die auf die axiale Längserstreckung der Lagerung bezogene Mitte der Lagerung innerhalb des von dem Topfwandabschnitt des topfförmigen Permanentmagnetenträgers begrenzten Hohlraums des topfförmigen Permanentmagnetenträgers liegt. Die Mitte der Lagerung kann für den Fachmann in einer an sich bekannten Weise definiert sein, und zwar durch die an der Lagerung wirkenden Lagerkräfte und/oder durch das Lagerartkonzept bzw. die geometrische Ausführung der Lager. In einem grundlegenden Fall, in dem die Motorwelle symmetrisch aufgebaut ist, kann sich die Mitte der Lagerung auch durch die Mitte des Zwischenabschnitts der Motorwelle ergeben.

Die Lagerung kann sich so weit in den Hohlraum des topfförmigen Permanentmagnetenträgers erstrecken, dass die auf die axiale Längserstreckung der Lagerung bezogene Mitte der Lagerung auf einer axialen Höhe liegt, in die sich auch die Einzelpermanentmagnete erstrecken oder der Ringpermanentmagnet erstreckt.

Die Lagerung kann sich insbesondere so weit in den Hohlraum des topfförmigen Permanentmagnetenträgers erstrecken, dass die auf die axiale Längserstreckung der Lagerung bezogene Mitte der Lagerung auf einer axialen Höhe liegt, in der die Einzelpermanentmagnete oder der Ringpermanentmagnet ihre axialen geometrischen Mitten aufweisen.

Die Lagerung kann sich aber auch so weit in den Hohlraum des topfförmigen Permanentmagnetenträgers erstrecken, dass die auf die axiale Längserstreckung der Lagerung bezogene Mitte der Lagerung auf einer ersten axialen Höhe liegt, die zumindest weitgehend nahe an oder genau auf einer zweiten axialen Höhe liegt, die durch die axiale Höhenlage des Schwerpunkts des Permanentmagnetenrotors bestimmt ist.

Zwar wird der Schwerpunkt des Permanentmagnetenrotors weitgehend durch das Gewicht der Einzelpermanentmagnete oder des Ringpermanentmagnets und des Rotorjochs bestimmt, so dass gegebenenfalls es schon ausreichend ist, wenn die Lagerung sich so weit in den Hohlraum des topfförmigen Permanentmagnetenträgers erstrecken, dass die auf die axiale Längserstreckung der Lagerung bezogene Mitte der Lagerung auf einer ersten axialen Höhe liegt, die zumindest weitgehend nahe an oder genau auf einer zweiten axialen Höhe liegt, die durch die axiale Höhenlage des Schwerpunkts der Einzelpermanentmagnete oder des Ringpermanentmagnets bestimmt ist. Soll aber auch das zwar vergleichsweise geringe Gewicht des Kunststoffkörpers des Permanentmagnetenträgers mit berücksichtigt werden, dann ist besser der Gesamtschwerpunkt von Einzelpermanentmagnete oder des Ringpermanentmagnets zusammen mit dem Rotorjoch und dem Kunststoffkörpers des Permanentmagnetenträgers bei der Bestimmung der axiale Höhenlage des Schwerpunkts des Permanentmagnetenrotors zu berücksichtigen.

Ergänzend kann die Pumpenkammerwand topfförmig mit einem Pumpenkammerwand-Topfboden ausgebildet sein und der Pumpenkammerwand-Topfboden kann dabei eine der Stirnseite des zweiten axialen Endabschnitts der Motorwelle zugewandte Anlauffläche aufweisen, die ausgebildet ist, zum Abstützen der Motorwelle in einer zur Lagerungsrichtung des Axiallagers der Lagerung entgegengesetzten Richtung. Die Anlauffläche wirkt insoweit in einer entgegengesetzten axialen Richtung, als das Axiallager der Nassläufer-Pumpe.

Die Aufgabe wird außerdem gelöst durch ein Haushaltsgerät, insbesondere Geschirrspülmaschine, Waschmaschine, Trockner oder Dunstabzugshaube, aufweisend eine Nassläufer-Pumpe nach einer Ausführung oder nach einer beliebigen Kombination mehrerer Ausführungen, wie beschrieben.

Ein konkretes Ausführungsbeispiel eines erfindungsgemäßen elektrischen Antriebsmotors und einer erfindungsgemäßen Nassläufer-Pumpe ist in der nachfolgenden Beschreibung unter Bezugnahme auf die beigefügten Figuren näher erläutert.

Es zeigen:
- Fig. 1: eine perspektivische Darstellung einer beispielhaften Nassläufer-Pumpe eines Haushaltsgeräts in Art einer Geschirrspülmaschine, die ein Pumpenrad und einen elektrischen Antriebsmotor aufweist;
- Fig. 2: eine Schnittdarstellung einer erfindungsgemäßen Nassläufer-Pumpe mit einem erfindungsgemäßen elektrischen Antriebsmotor;
- Fig. 3: eine explodierte Darstellung einer beispielhaften Ausführungsform eines erfindungsgemäßen elektrischen Antriebsmotors;
- Fig. 4: eine perspektivische Darstellung eines erfindungsgemäßen Stators des beispielhaften elektrischen Antriebsmotors gemäß Fig. 3;
- Fig. 5: eine Schnittdarstellung des elektrischen Antriebsmotors gemäß Fig. 3;
- Fig. 6: eine schematische Darstellung eines Stapels an linearen Ketten mit jeweils einer der Anzahl der Polschuhe des Stators entsprechenden Anzahl von Pohlschuh-Gliedern gemäß des Stators nach Fig. 4; und
- Fig. 7: eine schematische Darstellung, bei der die linearen Ketten von Pohlschuh-Gliedern gemäß Fig. 6 zu einem Kreisring-Statorblechpaket gebogen und verschweißt sind, vor einem Umspritzen mit dem die Spulenkörper bildenden Kunststoffspritzgusskörper, wie in Fig. 4 gezeigt.

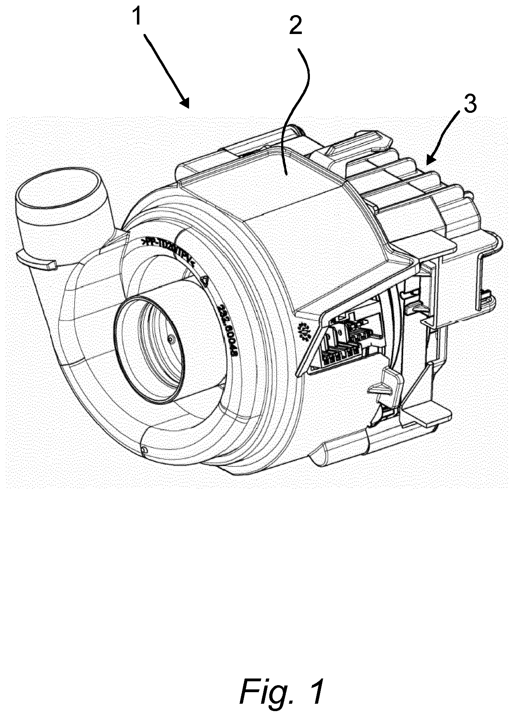

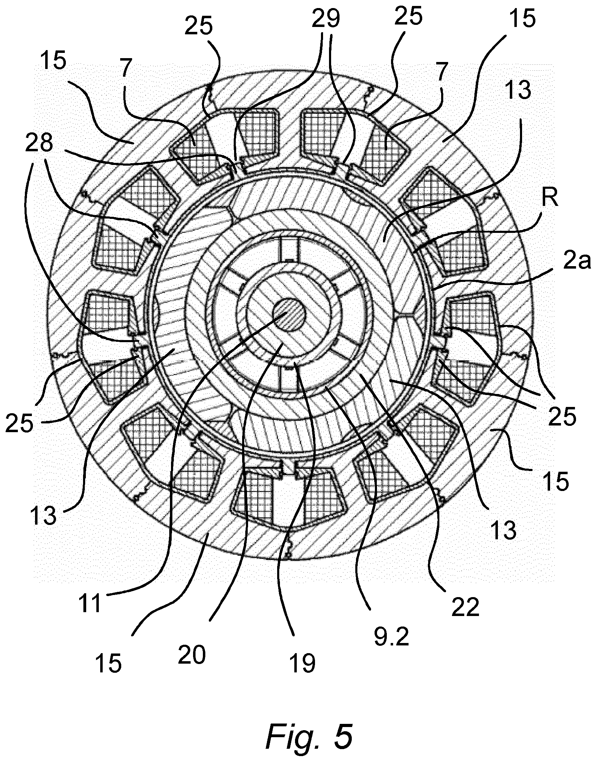

Die Fig. 1 bis Fig. 7 zeigen Bauteile eines Ausführungsbeispiels einer erfindungsgemäßen Nassläufer-Pumpe 1 eines beispielhaften Haushaltsgeräts bspw. einer Geschirrspülmaschine. Die Nassläufer-Pumpe 1 umfasst ein Pumpengehäuse 2 und einen erfindungsgemäßen elektrischen Antriebsmotor 3.

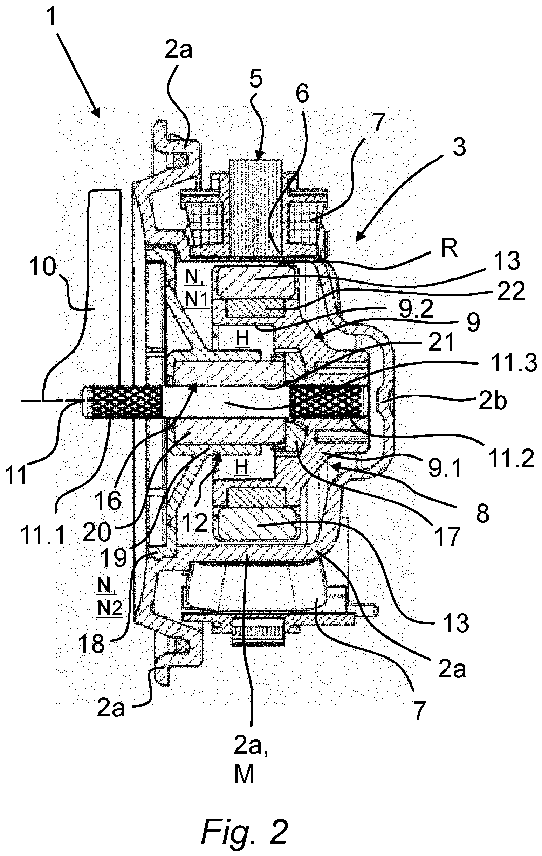

Wie insbesondere in Fig. 2 dargestellt ist, weist die Nassläufer-Pumpe 1 eine Pumpenkammerwand 2a auf, die einen Nassraum N der Nassläufer-Pumpe 1 begrenzt, ein im Nassraum N drehbar gelagertes Pumpenrad 10 und einen das Pumpenrad 10 antreibenden elektrischen Antriebsmotor 3, der einen außerhalb des Nassraumes N angeordneten Stator 5 mit Polschuhen 6 und wenigstens einer elektrisch ansteuerbaren Statorwicklung 7 aufweist, und der einen im Feld der Statorwicklung 7 unter Belassen eines Ringspaltes R drehantreibbar innerhalb des Nassraumes N gelagerten Permanentmagnetenrotor 8 aufweist.

Der Permanentmagnetenrotor 8 umfasst eine Motorwelle 11, auf der sowohl ein Permanentmagnetenträger 9 des Permanentmagnetenrotors 8, als auch das Pumpenrad 10 befestigt sind, wobei das Pumpenrad 10 an einem ersten axialen Endabschnitt 11.1 der Motorwelle 11 befestigt ist und der Permanentmagnetenträger 9 an einem dem ersten Endabschnitt 11.1 der Motorwelle 11 gegenüberliegenden zweiten axialen Endabschnitt 11.2 der Motorwelle 11 befestigt ist.

Die Motorwelle 11 ist mittels einer Lagerung 12 innerhalb des Nassraumes N drehbar gelagert, welche Lagerung 12 die Motorwelle 11 an einem axial zwischen dem ersten Endabschnitt 11.1 der Motorwelle 11 und dem zweiten Endabschnitt 11.2 der Motorwelle 11 angeordneten Zwischenabschnitt 11.3 der Motorwelle 11 trägt.

Der Permanentmagnetenrotor 8 weist die Motorwelle 11 und den auf der Motorwelle 11 sitzenden, in einem als Spritzgussteil hergestellten Permanentmagnetenträger 9 auf, an dem im Falle des vorliegenden Ausführungsbeispiels mehrere separate Permanentmagnete 13 über einen Umfang verteilt angeordnet sind.

Der Permanentmagnetenträger 9 kann insbesondere dadurch hergestellt werden, dass die einzelnen Permanentmagnete 13 und die Motorwelle 11 in eine Spritzgießform eingesetzt, darin lagerichtig positioniert und von einem Kunststoffwerkstoff, insbesondere einem Thermoplast umspritzt werden. Der Permanentmagnetenträger 9 entsteht in solchen Ausführungsformen insoweit durch die eingespritzte und ausgehärtete Kunststoffmasse. Die Gestalt des Permanentmagnetenträgers 9 wird dabei durch die Form der Kavität in der Spritzgießform vorgegeben.

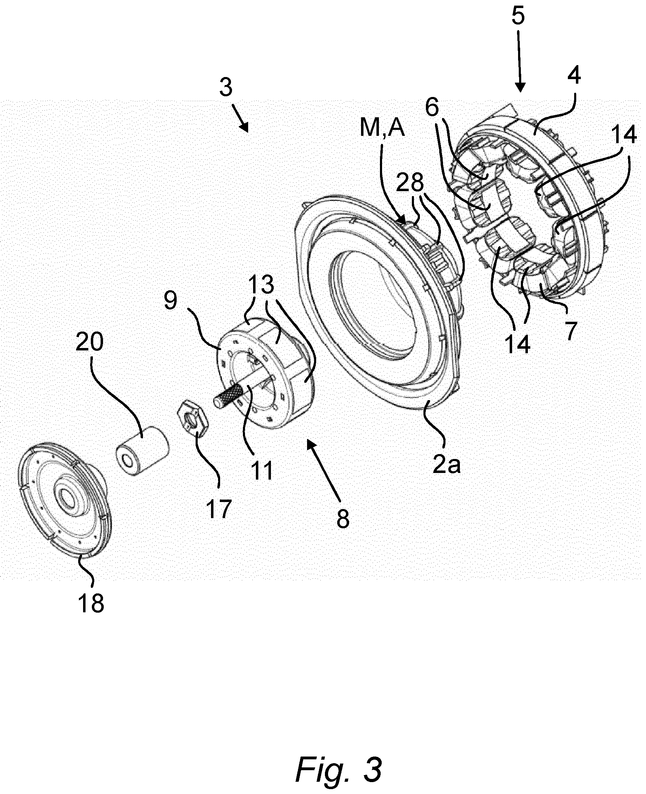

Die explodierte Darstellung gemäß Fig. 3 zeigt insbesondere den elektrischen Antriebsmotor 3, mit seinem Stator 5 mit einem aus mehreren gestapelten Einzelblechen zusammengesetzten Statorblechpaket 4, das mehrere Polschuhe 6 aufweist, mit einer der Anzahl der Polschuhen 6 entsprechenden Anzahl von Spulenkörpern 14 und mit wenigstens einer auf den Spulenkörpern 14 aufgewickelten elektrisch ansteuerbaren Statorwicklung 7, des Weiteren aufweisend einen im Feld der Statorwicklung 7 unter Belassen eines Ringspaltes R drehantreibbar gelagerten Permanentmagnetenrotor 8, der eine Motorwelle 11, einen auf der Motorwelle 11 sitzenden Permanentmagnetenträger 9 und wenigstens einen durch den Permanentmagnetenträger 9 gehaltenen Permanentmagneten 13 umfasst.

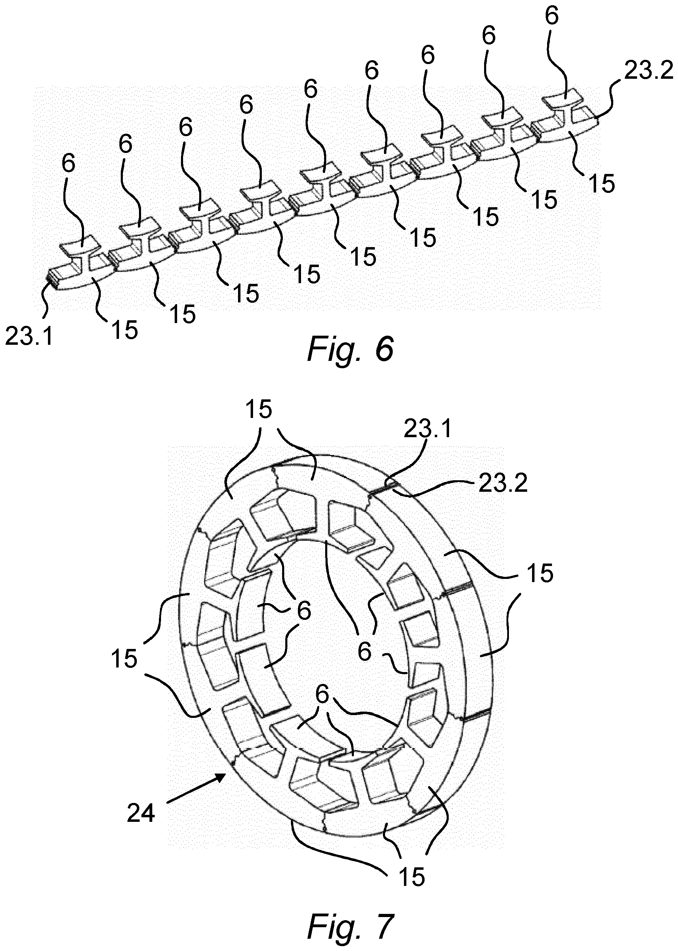

Wie die Fig. 6 zeigt sind die Einzelbleche jeweils aus einer linearen Kette von einer der Anzahl der Polschuhe 6 entsprechenden Anzahl von Pohlschuh-Gliedern 15 gebildet.

Nach einem Ausstanzen der linearen Ketten sind diese jeweils zu einem Kreisring gebogen, wie dies in Fig. 7 gezeigt ist, wobei die beiden aneinanderstoßenden, gegenüberliegenden Kettenenden 23.1, 23.2 des jeweils derart geformten Kreisrings durch jeweils eine Schweißstelle fest verbunden sind, wobei die mehreren Kreisringe zu einem Kreisring-Statorblechpaket 24 gestapelt sind.

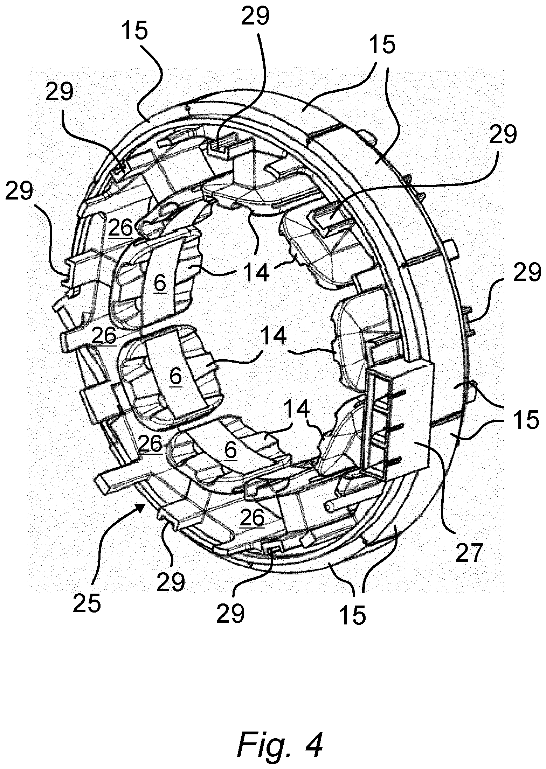

In der Fig. 4 wiederum ist dargestellt, wie die Spulenkörper 14 durch einen Kunststoffspritzgusskörper 25 gebildet werden, der im Kunststoffspritzgießverfahren durch Umspritzen des Kreisring-Statorblechpakets 24 gebildet ist.

An dem Kunststoffspritzgusskörper 25 sind Verbindungskanäle 26 ausgebildet, in denen die zwischen jeweils zwei benachbarten Spulenkörpern übertretenden Leitungsabschnitte der Statorwicklung 7 geführt sind.

Im Falle des vorliegenden Ausführungsbeispiels ist außerdem an dem Kunststoffspritzgusskörper 25 ein Steckergehäuse 27 ausgebildet, in dem wenigstens zwei an die Statorwicklung 7 angeschlossene Steckkontakte gelagert sind.

Zurückkommend auf Fig. 2 und Fig. 3 ist zwischen dem Stator 5 und dem Permanentmagnetenrotor 8 eine kreiszylindrische Mantelwand M angeordnet, die eine den Ringspalt R begrenzende Innenwand und eine dem Stator 5 zugewandte Außenwand A aufweist, an der Gegenführungen 28 angeordnet sind. An dem Kunststoffspritzgusskörper 25 sind außerdem Führungen 29 ausgebildet, die mit den korrespondierenden Gegenführungen 28 formschlüssig zusammenwirken, um den Stator 5 zumindest in radialer Richtung an der Außenwand A der Mantelwand M zu befestigen.

Im Falle des vorliegenden Ausführungsbeispiels ist die kreiszylindrische Mantelwand M erfindungsgemäß eine Pumpenkammerwand 2a des Pumpengehäuses 2 der den elektrischen Antriebsmotor 3 aufweisenden Nassläufer-Pumpe 1.

Die Nassläufer-Pumpe weist demgemäß eine Pumpenkammerwand 2a auf, die einen Nassraum N der Nassläufer-Pumpe 1 begrenzt, ein im Nassraum N drehbar gelagertes Pumpenrad 10 und den das Pumpenrad 10 antreibenden elektrischen Antriebsmotor 3, wobei der Stator 5 des elektrischen Antriebsmotors 3 außerhalb des Nassraumes N angeordnet ist, und der Permanentmagnetenrotor 8 des elektrischen Antriebsmotors 3 innerhalb des Nassraumes N drehantreibbar gelagert ist, wobei auf der Motorwelle 11 sowohl ein Permanentmagnetenträger 9 des Permanentmagnetenrotors 8, als auch das Pumpenrad 10 befestigt sind.

Der Permanentmagnetenrotor 8 umfasst die Motorwelle 11, auf der sowohl ein Permanentmagnetenträger 9 des Permanentmagnetenrotors 8, als auch das Pumpenrad 10 befestigt sind, wobei das Pumpenrad 10 an einem ersten axialen Endabschnitt 11.1 der Motorwelle 11 befestigt ist und der Permanentmagnetenträger 9 an einem dem ersten Endabschnitt 11.1 der Motorwelle 11 gegenüberliegenden zweiten axialen Endabschnitt 11.2 der Motorwelle 11 befestigt ist.

Die Motorwelle 11 ist mittels einer Lagerung 12 innerhalb des Nassraumes N drehbar gelagert, welche Lagerung 12 die Motorwelle 11 an einem axial zwischen dem ersten Endabschnitt 11.1 der Motorwelle 11 und dem zweiten Endabschnitt 11.2 der Motorwelle 11 angeordneten Zwischenabschnitt 11.3 der Motorwelle 11 trägt.

Der Permanentmagnetenrotor 8 weist die Motorwelle 11 und den auf der Motorwelle 11 sitzenden, in einem als Spritzgussteil hergestellten Permanentmagnetenträger 9 auf, an dem im Falle des vorliegenden Ausführungsbeispiels mehrere separate Permanentmagnete 13 über einen Umfang verteilt angeordnet sind.

Der Permanentmagnetenträger 9 kann insbesondere dadurch hergestellt werden, dass die einzelnen Permanentmagnete 13 und die Motorwelle 11 in eine Spritzgießform eingesetzt, darin lagerichtig positioniert und von einem Kunststoffwerkstoff, insbesondere einem Thermoplast umspritzt werden. Der Permanentmagnetenträger 9 entsteht in solchen Ausführungsformen insoweit durch die eingespritzte und ausgehärtete Kunststoffmasse. Die Gestalt des Permanentmagnetenträgers 9 wird dabei durch die Form der Kavität in der Spritzgießform vorgegeben.

Dabei sind die Magnetaußenoberflächen der Permanentmagnete 13 frei von Spritzmaterial des Permanentmagnetenträgers 9 und begrenzen unmittelbar den Ringspalt R, d.h. der Ringspalt R wird innenumfangsseitig von den Magnetaußenoberflächen der Permanentmagnete 13 gebildet. Im Falle des erfindungsgemäßen Nassläufermotors ist der elektrische Antriebsmotor 3 ausgebildet, dass der Ringspalt R von einer Flüssigkeit, wie beispielsweise Wasser oder einer Spülflotte einer Geschirrspülmaschine durchflossen ist. In einem solchen Fall werden die Magnetaußenoberflächen der Permanentmagnete 13 unmittelbar von der Flüssigkeit, wie beispielsweise Wasser oder der Spülflotte einer Geschirrspülmaschine benetzt.

Die Lagerung 12 weist, wie insbesondere in Fig. 2 dargestellt, ein einziges Radial-Gleitlager 16 auf, das ausgebildet ist, den Zwischenabschnitt 11.3 der Motorwelle 11 drehbar zu lagern- Außerdem weist die Lagerung 12 ein einziges Axiallager 17 auf, das ausgebildet ist, die Motorwelle 11 in einer einzigen axialen Richtung abzustützen.

Die Lagerung 12 weist im Falle des dargestellten Ausführungsbeispiels ein mit der Pumpenkammerwand 2a fest verbundenes Lagerschild 18 auf, das einen Lagersitz 19 trägt, an dem eine Lagerbuchse 20 ausgebildet ist, welche eine Nabe 21 umfasst, in welcher der Zwischenabschnitt 11.3 der Motorwelle 11 drehbar gelagert ist.

Die Nassläufer-Pumpe 1 weist ein Pumpengehäuse 2 auf, an dem die Pumpenkammerwand 2a einteilig ausgebildet und das Lagerschild 18 als separates Bauteil starr befestigt sind, wobei die Pumpenkammerwand 2a eine kreiszylindrische Mantelwand M aufweist und der Lagersitz 19 konzentrisch zur kreiszylindrischen Mantelwand M der Pumpenkammerwand 2a innerhalb der Nasskammer N angeordnet ist.

Der Lagersitz 19 des Lagerschilds 18 weist im Falle des vorliegenden Ausführungsbeispiels eine kreiszylindrische Innenwand auf und die Lagerbuchse 20 weist eine zur kreiszylindrischen Innenwand des Lagerschilds 18 korrespondierende kreiszylindrische Außenmantelwand auf, die wie dargestellt derart ausgebildet ist, dass die Lagerbuchse 20 passgenau in den Lagersitz 19 eingefügt ist.

Das Lagerschild 18 bildet eine Zwischenwand, welche einen ersten Teilraum N1 des Nassraums N, in dem der Permanentmagnetenträger 8 angeordnet ist, von einem zweiten Teilraum N2 des Nassraums N, in dem das Pumpenrad 10 angeordnet ist, separiert.

Gemäß der ersten Ausführungsform nach Fig. 3 und Fig. 4 kann der Permanentmagnetenrotor 3 mehrere gleichmäßig über einen Umfang verteilt angeordnete Einzelpermanentmagnete aufweisen, die von einem Rotorjoch 22 aus magnetischem Edelstahl hinterlegt sind. Dabei wird der Permanentmagnetenträger 9 durch einen Spritzguss-Kunststoffkörper gebildet, welcher das Rotorjoch 22 und die Einzelpermanentmagnete durch Umspritzen des Rotorjochs 22 und der Einzelpermanentmagnete mit der Kunststoffmasse des Spritzguss-Kunststoffkörpers zur Bildung des Permanentmagnetenträgers 9 verbindet.

Alternativ (nicht dargestellt) kann der Permanentmagnetenrotor einen einzelnen, mehrere magnetische Polpaare aufweisenden Ringpermanentmagnet aufweisen, der von einem Rotorjoch aus magnetischem Edelstahl hinterlegt ist und der Permanentmagnetenträger durch einen Spritzguss-Kunststoffkörper gebildet wird, welcher das Rotorjoch und den Ringpermanentmagnet durch Umspritzen des Rotorjochs und des einzelnen Ringpermanentmagnets mit der Kunststoffmasse des Spritzguss-Kunststoffkörpers zur Bildung des Permanentmagnetenträgers verbindet.

Der Permanentmagnetenträger 9 ist im Falle der vorliegenden Ausführungsbeispiels topfförmig ausgebildet, derart, dass der Permanentmagnetenträger 9 einen Topfbodenabschnitt 9.1 aufweist, über den der Permanentmagnetenträger 9 an dem zweiten axialen Endabschnitt der Motorwelle 11 befestigt ist und der Permanentmagnetenträger 9 einen sich an den Topfbodenabschnitt 9.1 anschließenden, die Motorwelle 11 koaxial umgebenden Topfwandabschnitt 9.2 aufweist, der einen Hohlraum H des Permanentmagnetenträgers 9 begrenzt, in welchen Hohlraum H sich die Lagerung 12 hinein erstreckt.

Die Lagerung 12 kann sich so weit in den Hohlraum H des topfförmigen Permanentmagnetenträgers 9 erstrecken, dass die auf die axiale Längserstreckung der Lagerung 12 bezogene Mitte der Lagerung 12 innerhalb des von dem Topfwandabschnitt 9.2 des topfförmigen Permanentmagnetenträgers 9 begrenzten Hohlraums H des topfförmigen Permanentmagnetenträgers 9 liegt. Insbesondere kann sich die Lagerung 12 so weit in den Hohlraum H des topfförmigen Permanentmagnetenträgers 9 erstrecken, dass die auf die axiale Längserstreckung der Lagerung 12 bezogene Mitte der Lagerung 12 auf einer axialen Höhe liegt, in die sich auch die Einzelpermanentmagnete erstrecken oder der Ringpermanentmagnet erstreckt.

Die Lagerung 12 kann sich außerdem so weit in den Hohlraum H des topfförmigen Permanentmagnetenträgers 9 erstrecken, dass die auf die axiale Längserstreckung der Lagerung 12 bezogene Mitte der Lagerung auf einer ersten axialen Höhe liegt, die zumindest weitgehend nahe an oder genau auf einer zweiten axialen Höhe liegt, die durch die axiale Höhenlage des Schwerpunkts des Permanentmagnetenrotors 8 bestimmt ist.

Die Pumpenkammerwand 2a kann ergänzend topfförmig mit einem Pumpenkammerwand-Topfboden 2b ausgebildet sein und der Pumpenkammerwand-Topfboden 2b kann dabei eine der Stirnseite des zweiten axialen Endabschnitts 11.2 der Motorwelle 11 zugewandte Anlauffläche aufweisen, die ausgebildet ist, zum Abstützen der Motorwelle 11 in einer zur Lagerungsrichtung des Axiallagers 17 der Lagerung 12 entgegengesetzten Richtung.

### BEZUGSZEICHENLISTE

- 1: Nassläufer-Pumpe
- 2: Pumpengehäuse
- 2a: Pumpenkammerwand
- 2b: Pumpenkammerwand-Topfboden
- 3: elektrischer Antriebsmotor
- 4: Statorblechpaket
- 5: Stator
- 6: Polschuhe
- 7: Statorwicklung
- 8: Permanentmagnetenrotor
- 9: Permanentmagnetenträger
- 9.1: Topfbodenabschnitt
- 9.2: Topfwandabschnitt
- 10: Pumpenrad
- 11: Motorwelle
- 11.1: erster axialer Endabschnitt
- 11.2: zweiter axialer Endabschnitt
- 11.3: Zwischenabschnitt
- 12: Lagerung
- 13: Permanentmagnete
- 14: Spulenkörper
- 15: Polschuh-Glieder
- 16: Radial-Gleitlager
- 17: Axiallager
- 18: Lagerschild
- 19: Lagersitz
- 20: Lagerbuchse
- 21: Nabe
- 22: Rotorjoch
- 23.1,23.2: Kettenenden
- 24: Kreisring-Statorblechpaket
- 25: Kunststoffspritzgusskörper
- 26: Verbindungskanäle
- 27: Steckergehäuse
- 28: Gegenführungen
- 29: Führungen

- A: Außenwand
- H: Hohlraum
- M: kreiszylindrische Mantelwand
- N: Nassraum
- N1: erster Teilraum
- N2: zweiter Teilraum
- R: Ringspalt

## Patentansprüche

1. Nassläufer-Pumpe (1) für ein Haushaltsgerät, aufweisend eine Pumpenkammerwand (2a), die einen Nassraum (N) der Nassläufer-Pumpe (1) begrenzt, ein im Nassraum (N) drehbar gelagertes Pumpenrad (10) und einen das Pumpenrad (10) antreibenden elektrischen Antriebsmotor (3), wobei der elektrische Antriebsmotor (3) einen Stator (5) mit einem aus mehreren gestapelten Einzelblechen zusammengesetzten Statorblechpaket (4), das mehrere Polschuhe (6) aufweist, mit einer der Anzahl der Polschuhe (6) entsprechenden Anzahl von Spulenkörpern (14) und mit wenigstens einer auf den Spulenkörpern (14) aufgewickelten elektrisch ansteuerbaren Statorwicklung (7), und des Weiteren einen im Feld der Statorwicklung (7) unter Belassen eines Ringspaltes (R) drehantreibbar gelagerten Permanentmagnetenrotor (8), der eine Motorwelle (11), einen auf der Motorwelle (11) sitzenden Permanentmagnetenträger (9) und wenigstens einen durch den Permanentmagnetenträger (9) gehaltenen Permanentmagneten umfasst, aufweist, wobei der Stator (5) des elektrischen Antriebsmotors (3) außerhalb des Nassraumes (N) angeordnet ist, und der Permanentmagnetenrotor (8) des elektrischen Antriebsmotors (3) innerhalb des Nassraumes (N) drehantreibbar gelagert ist, wobei auf der Motorwelle (11) sowohl ein Permanentmagnetenträger (9) des Permanentmagnetenrotors (8), als auch das Pumpenrad (10) befestigt sind, und wobei zwischen dem Stator (5) und dem Permanentmagnetenrotor (8) eine kreiszylindrische Mantelwand (M) angeordnet ist, die die Pumpenkammerwand (2a) eines Pumpengehäuses (2) ist und eine den Ringspalt (R) begrenzende Innenwand und eine dem Stator (5) zugewandte Außenwand aufweist, wobei die Einzelbleche jeweils aus einer linearen Kette von einer der Anzahl der Polschuhe (6) entsprechenden Anzahl von Pohlschuh-Gliedern (15) gebildet sind, die nach einem Ausstanzen der linearen Ketten jeweils zu einem Kreisring gebogen sind, wobei die beiden aneinanderstoßenden, gegenüberliegenden Kettenenden (23.1, 23.2) des jeweils derart geformten Kreisrings durch jeweils eine Schweißstelle fest verbunden sind, wobei die mehreren Kreisringe zu einem Kreisring-Statorblechpaket (24) gestapelt sind, wobei die Spulenkörper (14) durch einen Kunststoffspritzgusskörper (25) gebildet werden, der im Kunststoffspritzgießverfahren durch Umspritzen des Kreisring-Statorblechpakets (24) gebildet ist, wobei an der dem Stator (5) zugewandten Außenwand der kreiszylindrischen Mantelwand (M) Gegenführungen (28) angeordnet sind, und wobei an dem Kunststoffspritzgusskörper (25) Führungen (29) ausgebildet sind, die mit den korrespondierenden Gegenführungen (28) formschlüssig zusammenwirken, um den Stator (5) zumindest in radialer Richtung an der Außenwand (A) der Mantelwand (M) zu befestigen.

2. Nassläufer-Pumpe (1) nach Anspruch 1, **dadurch gekennzeichnet, dass** an dem Kunststoffspritzgusskörper (25) Verbindungskanäle (26) ausgebildet sind, in denen die zwischen jeweils zwei benachbarten Spulenkörpern (14) übertretenden Leitungsabschnitte der Statorwicklung (7) geführt sind.

3. Nassläufer-Pumpe (1) nach Anspruch 1 oder 2, **dadurch gekennzeichnet, dass** an dem Kunststoffspritzgusskörper (25) ein Steckergehäuse (27) ausgebildet ist, in dem wenigstens zwei an die Statorwicklung (7) angeschlossene Steckkontakte gelagert sind.

4. Nassläufer-Pumpe (1) nach Anspruch 3, **dadurch gekennzeichnet, dass** ein Steckergehäuse (27) aus Kunststoff unmittelbar an dem Kunststoffspritzgusskörper (25) mit angespritzt ist.

5. Nassläufer-Pumpe nach mindestens einem der vorhergehenden Ansprüche, **dadurch gekennzeichnet, dass** das Pumpenrad (10) an einem ersten axialen Endabschnitt (11.1) der Motorwelle (11) befestigt ist und der Permanentmagnetenträger (9) an einem dem ersten Endabschnitt (11.1) der Motorwelle (11) gegenüberliegenden zweiten axialen Endabschnitt (11.2) der Motorwelle (11) befestigt ist und die Motorwelle (11) mittels einer Lagerung (12) innerhalb des Nassraumes (N) drehbar gelagert ist, welche die Motorwelle (11) an einem axial zwischen dem ersten Endabschnitt (11.1) der Motorwelle (11) und dem zweiten Endabschnitt (11.2) der Motorwelle (11) angeordneten Zwischenabschnitt (11.3) der Motorwelle (11) trägt.

6. Haushaltsgerät, insbesondere Geschirrspülmaschine, Waschmaschine, Trockner oder Dunstabzugshaube, aufweisend eine Nassläufer-Pumpe (1) nach mindestens einem der vorhergehenden Ansprüche.

## Claims

1. Wet rotor pump (1) for a household appliance, having a pump chamber wall (2a), which delimits a wet space (N) of the wet rotor pump (1), a pump wheel (10) rotatably mounted in the wet space (N) and an electric drive motor (3) driving the pump wheel (10), wherein the electric drive motor (3) has a stator (5) with a stator laminated core (4) composed of a plurality of stacked individual sheets, which has a plurality of pole shoes (6), with a number of coil bodies (14) corresponding to the number of the pole shoes (6) and with at least one electrically actuatable stator winding (7) that is wound on the coil bodies (14), and furthermore has a permanent magnet rotor (8) which is mounted such that it can be rotatably driven in the field of the stator winding (7) while leaving a ring gap I, said permanent magnet rotor comprising a motor shaft (11), a permanent magnet carrier (9) seated on the motor shaft (11) and at least one permanent magnet held by the permanent magnet carrier (9), wherein the stator (5) of the electric drive motor (3) is arranged outside the wet space (N), and the permanent magnet rotor (8) of the electric drive motor (3) is mounted such that it can be rotatably driven within the wet space (N), wherein both a permanent magnet carrier (9) of the permanent magnet rotor (8) and the pump wheel (10) are fastened to the motor shaft (11), and wherein arranged between the stator (5) and the permanent magnet rotor (8) is a circular cylindrical peripheral wall (M), which is the pump chamber wall (2a) of a pump housing (2) and has an inner wall delimiting the ring gap I and an outer wall facing towards the stator (5), wherein the individual sheets are in each case formed of a linear chain of a number of pole shoe members (15) corresponding to the number of the pole shoes (6), said pole shoe members each being bent to form a circular ring after the linear chain has been punched out, wherein the two abutting, opposite ends of the chain (23.1, 23.2) of the circular ring formed in such a manner in each case are permanently connected by a welding point in each case, wherein the plurality of circular rings are stacked to form a circular ring stator laminated core (24), wherein the coil bodies (14) are formed by a plastic injection moulded body (25), which in the plastic injection moulded method is formed by injection moulding of the circular ring stator laminated core (24), wherein counter guides (28) are arranged on the outer wall of the circular cylindrical peripheral wall (M) facing towards the stator (5), and wherein embodied on the plastic injection moulded body (25) are guides (29), which interact with the corresponding counter guides (28) with a positive fit, in order to fasten the stator (5) to the outer wall (A) of the peripheral wall (M), at least in the radial direction.

2. Wet rotor pump (1) according to claim 1, **characterised in that** embodied on the plastic injection moulded body (25) are connecting channels (26), in which the line sections of the stator winding (7) passing over between two adjacent coil bodies (14) in each case are guided.

3. Wet rotor pump (1) according to claim 1 or 2, **characterised in that** embodied on the plastic injection moulded body (25) is a plug housing (27), in which at least two plug contacts connected to the stator winding (7) are mounted.

4. Wet rotor pump (1) according to claim 3, **characterised in that** a plug housing (27) made of plastic is sprayed directly onto the plastic injection moulded body (25).

5. Wet rotor pump according to at least one of the preceding claims, **characterised in that** the pump wheel (10) is fastened to a first axial end section (11.1) of the motor shaft (11) and the permanent magnet carrier (9) is fastened to a second axial end section (11.2) of the motor shaft (11) opposite the first end section (11.1) of the motor shaft (11) and the motor shaft (11) is rotatably mounted by means of a bearing (12) within the wet space (N), which carries the motor shaft (11) at an intermediate section (11.3) of the motor shaft (11) axially arranged between the first end section (11.1) of the motor shaft (11) and the second end section (11.2) of the motor shaft (11).

6. Household appliance, in particular dishwasher, washing machine, dryer or extractor hood, having a wet rotor pump (11) according to at least one of the preceding claims.

## Revendications

1. Pompe à rotor noyé (1) pour un appareil électroménager, comprenant une paroi de chambre de pompe (2a), qui délimite un espace humide (N) de la pompe à rotor noyé (1), une roue de pompe (10) montée en rotation dans le compartiment humide (N) et un moteur d'entraînement (3) électrique entraînant la roue de pompe (10), dans laquelle le moteur d'entraînement électrique (3) comprend un stator (5) comprenant un empilement de tôles de stator (4) constitué de plusieurs tôles individuelles empilées, qui comprend plusieurs pièces polaires (6), un certain nombre de corps de bobine (14) correspondant au nombre de pièces polaires (6), et au moins un enroulement de stator (7) électriquement excitable enroulé sur les corps de bobine (14), et en outre un rotor à aimants permanents (8) monté de façon à pouvoir être entraîné en rotation dans le champ de l'enroulement de stator (7) en ménageant une fente annulaire (R), lequel comprend un arbre de moteur (11), un support d'aimants permanents (9) siégeant sur l'arbre de moteur (11) et au moins un aimant permanent supporté par le support d'aimants permanents (9),
dans laquelle le stator (5) du moteur d'entraînement (3) électrique est disposé à l'extérieur de l'espace humide (N), et le rotor à aimants permanents (8) du moteur d'entraînement électrique (3) est monté de façon à pouvoir être entraîné en rotation à l'intérieur de l'espace humide (N),
dans laquelle un support d'aimants permanents (9) du rotor à aimants permanents (8) ainsi que la roue de pompe (10) sont fixés sur l'arbre de moteur (11), et
une paroi d'enveloppe (M) cylindrique circulaire est disposée entre le stator (5) et le rotor à aimants permanents (8), laquelle est la paroi de chambre de pompe (2a) d'un carter de pompe (2a) et comprend une paroi intérieure délimitant la fente annulaire (R) et une paroi extérieure orientée vers le stator (5),
dans laquelle les tôles individuelles sont formées respectivement d'une chaîne linéaire d'un certain nombre de maillons de pièce polaire (15) correspondant au nombre de pièces polaires (6), qui sont courbés par estampage des chaînes linéaires respectivement pour former un anneau circulaire,
dans laquelle les deux extrémités de chaîne (23.1, 23.2) opposées jointives de l'anneau circulaire formé respectivement de la sorte sont assemblées solidement respectivement par une soudure,
dans laquelle les plusieurs anneaux circulaires sont empilés pour former un empilement de tôles de stator en anneau circulaire (24),
dans laquelle les corps de bobine (14) sont formés par un corps moulé par injection en matière plastique (25), qui est formé par enrobage par injection de l'empilement de tôles de stator en anneau circulaire (24) dans le procédé de moulage par injection de matière plastique,
dans laquelle des contre-guides (28) sont agencés sur la paroi extérieure orientée vers le stator (5) de la paroi d'enveloppe cylindrique circulaire (M), et
dans laquelle des guidages (29) sont formés sur le corps moulé par injection en matière plastique (25), lesquels coopèrent par liaison de forme avec les contre-guides correspondants (28), pour fixer le stator (5) au moins dans une direction radiale sur la paroi extérieure (A) de la paroi d'enveloppe (M).

2. Pompe à rotor noyé (1) selon la revendication 1, **caractérisée en ce que** des canaux de liaison (26) sont formés sur le corps moulé par injection en matière plastique (25), dans lesquels sont guidés les sections de ligne de l'enroulement de stator (7) passant respectivement entre deux corps de bobine (14) adjacents.

3. Pompe à rotor noyé (1) selon la revendication 1 ou 2, **caractérisée en ce qu'**un boîtier de connecteur (27) est formé sur le corps moulé par injection en matière plastique (25), dans lequel au moins deux contacts enfichables reliés à l'enroulement de stator (7) sont montés.

4. Pompe à rotor noyé (1) selon la revendication 3, **caractérisée en ce qu'**un boîtier de connecteur (27) en matière plastique est directement co-moulé par injection sur le corps moulé par injection en matière plastique (25).

5. Pompe à rotor noyé (1) selon l'une des revendications précédentes, **caractérisée en ce que** la roue de pompe (10) est fixée à une première section terminale axiale (11.1) de l'arbre de moteur (11) et le support d'aimants permanents (9) est fixé à une deuxième section terminale axiale (11.2) de l'arbre de moteur (11) opposée à la première section terminale axiale (11.1) de l'arbre de moteur (11) et l'arbre de moteur (11) est monté à rotation au moyen d'un palier (12) à l'intérieur de l'espace humide (N), lequel supporte l'arbre de moteur (11) au niveau d'une section intermédiaire (11.3) de l'arbre de moteur (11) disposée axialement entre la première section terminale (11.1) de l'arbre de moteur (11) et la deuxième section terminale (11.2) de l'arbre de moteur (11).

6. Appareil électroménager, en particulier lave-vaisselle, lave-linge, sèche-linge ou hotte d'aspiration, comprenant une pompe à rotor noyé (1) selon au moins l'une des revendications précédentes.
